# EUROPEAN PATENT APPLICATION

(11) **EP 3 770 578 A1**
(43) Date of publication of application: **27.01.2021**
(21) Application number: 19187697.8
(22) Date of filing: 23.07.2019
(51) Int. Cl.: G01N 15/00, G01N 15/14, A41D 13/11, A61M 16/00, A62B 18/00

(54) **A PARTICLE SENSING SYSTEM FOR EXAMPLE FOR USE IN A POLLUTION MASK**

(71) Applicant: Koninklijke Philips N.V., 5656 AG Eindhoven (NL)
(72) Inventor: VERSCHUEREN, Alwin Rogier Martijn, 5656 AE Eindhoven (NL); KELLY, Declan Patrick, 5656 AE Eindhoven (NL); SPRUIT, Johannes Hendrikus Maria, 5656 AE Eindhoven (NL); JUTTE, Petrus Theodorus, 5656 AE Eindhoven (NL)
(74) Representative: de Haan, Poul Erik

(57) **Abstract**

A system makes use of optical particle sensing and has a light source, a detector for detecting the presence of light reflected back to the detector, and a processor for determining a particulate matter count or concentration based on the received light reflected by particulate matter. An optical unit is along the light path which suppresses direct reflections back to the detector. The detector provides a detection signal dependent on interference between the emitted light and light reflected to the detector. In this way, an interference based optical sensor can be reduced in size without compromising the sensing capability.

## Description

### FIELD OF THE INVENTION

This invention relates to the sensing of particulate matter, for example for use in breathing assistance face masks.

### BACKGROUND OF THE INVENTION

Air pollution is a worldwide concern. The World Health Organization (WHO) estimates that 4 million people die from air pollution every year. Part of this problem is the outdoor air quality in cities. Nearly 300 smog-hit cities fail to meet national air quality standards.

Official outdoor air quality standards define particle matter concentration as mass per unit volume (e.g. µg/m³). A particular concern is pollution with particles having a diameter less than 2.5 µm (termed "PM2.5", PM: Particulate Matter) as they are able to penetrate into the gas exchange regions of the lung (alveoli), and very small particles (<100 nm) may pass through the lungs to affect other organs.

Since this problem will not improve significantly on a short time scale, a common way to deal with this problem is to wear a mask which provides cleaner air by filtration and the market for masks in China and elsewhere has seen a great surge in recent years.

Such masks may be made of material that acts as a filter of pollutant particles, or may have a filter for only part of the mask surface, and this filter may be replaceable when it becomes clogged.

However, during use, the temperature and relative humidity inside the mask increases and, combined with the pressure difference inside the mask relative to the outside, this makes breathing uncomfortable. This can be mitigated in part by providing an outlet valve or check valve which allows exhaled air to escape the mask with little resistance, but which requires inhaled air to be drawn through the filter. To improve comfort and effectiveness, a fan can be added to the mask, this fan drawing in air through the filter.

The benefit to the wearer of using a fan-powered mask is that the lungs are relieved of the slight strain caused by inhalation against the resistance of the filters in a conventional non-powered mask. Furthermore, in a conventional non-powered mask, inhalation also causes a slight pressure drop within the mask which leads to leakage of the contaminants into the mask, which leakage could prove dangerous if these are toxic substances.

Fan-assisted masks thus may improve the wearing comfort by reducing the temperature, humidity and breathing resistance.

In one arrangement, an inlet (i.e. inhale) fan may be used to provide a continuous intake of air. In this way, the lungs are relieved of the slight strain caused by inhalation against the resistance of the filters in a conventional non-powered mask. A steady stream of air may then be provided to the face and may for example provide a slight positive pressure, to ensure that any leakage is outward rather than inward. However, this gives additional resistance to breathing when exhaling.

In another arrangement, an exhaust (i.e. exhale) fan may be used to provide a continuous release of air. This instead provides breathing assistance when exhaling, but, in contrast to the use of a passive outlet valve, this has the disadvantage that a negative pressure in the mask volume may result, so that leakage around the mask edge results in polluted air leaking into the mask volume.

Another alternative is to provide both inlet and exhaust fans, and to time the control of the fans in synchronism with the breathing cycle of the user. The breathing cycle may be measured based on pressure (or differential pressure) measurements. This provides improved control of temperature and humidity as well as reducing the resistance to breathing for both inhalation and exhalation.

Thus, several types of mask for preventing daily exposure to air pollutants are available, including passive masks, passive masks with an exhale valve, and masks with at least one active fan.

Power consumption is an issue with fan-assisted masks, since they are battery operated devices. One way to provide power savings is to monitor a pollution level and to control the fan accordingly. The ambient pollution level may be monitored and/or the filtered air inside the mask may be monitored to assure filtration performance.

The most widely used sensor technology for measuring particulate matter concentration is based on optical light scattering. Such sensor devices typically consist of a heater element or fan for generating a controlled air flow, a LED or laser as light source, and a photo-detector to receive light affected by the presence of particulate matter.

Due to the above components and the optical light path, the outer dimensions of these devices are typically several centimeters in length, width and depth, and therefore not practical to embed into an air filtering facemask.

An alternative particulate matter sensor technology is an SMI (Self Mixing Interference) sensor. For example, this type of particle sensor is disclosed in WO 2018/104153. It makes use of a laser sensor module using interference or self-mixing interference for particle density detection. The advantage of the SMI sensor is its extremely compact size.

However, a limitation of the SMI sensor is that the light path emitted from the laser should be free of obstructions for a certain distance, which may be as large as 30 centimeters. Otherwise, light reflected by the obstruction is falsely interpreted as relating to a particle. Although the SMI sensor itself is extremely compact, this limitation on the optical light path makes it problematic to embed inside an air filtering facemask, and in other applications where the sensor needs to measure the particulate matter in a compact interior volume.

There is therefore a need for a solution to enable the integration of an optical sensor into a compact volume so that it can be employed in a pollution mask.

### SUMMARY OF THE INVENTION

The invention is defined by the claims.

According to examples in accordance with an aspect of the invention, there is provided a particle sensing system comprising:
an air chamber;
an interference-based particle sensor comprising:
   a light source for emitting light along a light path to the air chamber;
   a detector for providing a detection signal dependent on interference between the emitted light and light reflected by particulate matter towards the detector; and
   a processor for determining a particulate matter count or concentration based on the received light reflected by the particulate matter; and
an optical unit along the light path which suppresses direct reflections from the optical unit to the detector.

The suppression of reflections by the optical unit means the physical length of the light path from the light source to the optical unit can be reduced. The sensor for example requires the light path to be free of obstructions for a predetermined distance which may be tens of centimeters. Obstructions within that predetermined distance can reflect light which will be detected, and the sensor may falsely interpret these signals as relating to particulate matter. The optical unit is arranged such that the detector does not receive light directly reflected from the optical unit. Thus, the space occupied by the light path can be reduced without increasing the risk of false interpretations by the sensor. This enables a more compact design for the air chamber. When used in a pollution mask, this in turn enables a more compact design for the pollution mask.

In one set of examples, the light source and the detector are co-located and integrated as single unit. Thus, the reflected light which is to be analyzed is returned to the light source where the interference between the emitted light and the reflected light takes place. This provides a compact structure.

The sensor is for example a self-mixing interference sensor.

The optical unit may comprise a light-absorbing material.

A light-absorbing material absorbs the light emitted from the light source along the light path instead of reflecting it back towards the light source. In this way, the light path is terminated before the predetermined distance is reached. This enables the reduction in space required by the sensor.

The optical unit may instead comprise a reflector which faces away from the detector. In this way, the light path is guided by the reflector along a predetermined path rather than being reflected back towards the light source.

The optical unit may then comprise a plurality of reflectors for providing a light path length of at least 30cm before a reflection is directed back to the detector. The light path for example follows a zig-zag path between two reflecting surfaces which extend over a sufficient length to enclose multiple reflections, which together result in a desired path length.

This enables the space required by the light path to be compacted, for example into a folding path, without reducing a length of the light path.

A focusing arrangement is preferably provided for focusing the light emitted from the light source to a focal point located between the light source and the optical unit.

In this way, the sensor determines the particulate matter count or concentration at the focal point. This optimizes the performance of the sensor.

The optical unit is for example located between 5cm and 10cm from the focal point along the light path.

The minimum 5cm length of the light path for example reduces the number of false interpretations determined by the sensor unit to less than 1 per second. The maximum 10cm length ensures space savings, compared to the effective path length which maybe around 30cm.

The light emitted from the light source for example has a near infra-red wavelength in the range of 700nm to 1000nm, for example 850nm. The light source thus uses infra-red light.

The particle sensing system may be applied to a pollution mask.

In one set of examples, the air chamber defines a closed volume against the face of a wearer of the pollution mask, and the pollution mask further comprises a filter which forms a boundary between the air chamber and ambient surroundings outside the air chamber.

This defines one possible general type of face mask, which seals against the face to define a closed volume, and the mask body itself defines the filter.

A fan may then be provided for drawing air from outside the air chamber into the air chamber through the filter and/or drawing air from the air chamber to the outside.

In this way, the fan creates an air flow between the ambient surroundings and the air chamber, enabling the filtering of air drawn into the air chamber. Different fan and filter options are possible, including an intake fan, an exhaust fan or both.

In another set of examples, the air chamber defines an open volume against the face of a wearer of the pollution mask, and the pollution mask further comprises a fan and filter for maintaining a pressure of filtered air greater than atmospheric pressure in the open volume.

This defines another possible general type of face mask which maintains a positive pressure so that a flow of filtered air is maintained into the open volume, and the flow exits the open volume to the ambient surroundings.

In all examples, a controller may be provided, adapted to control a speed of the fan based on the determined particulate matter count or concentration.

Thus, the speed of the fan may be controlled based on the pollution level in the mask (caused by the ambient surroundings). The fan speed is thus increased for increased pollution levels. It maybe turned off if the pollution levels are below a threshold, thereby saving power. Thus, there may be different fan speed settings for different ranges of pollution level.

A second sensor may be located outside the air chamber for determining the particulate matter count or concentration in the ambient surroundings.

In this way, the particulate matter count or concentration in the air chamber and in the ambient surroundings can be determined. A controller may then be adapted to determine a difference between the particulate matter count or concentration in the air chamber and the particulate matter count or concentration in the ambient surroundings.

This comparison of the particulate matter count or concentration in the air chamber and in the surroundings enables the filter performance to be determined. This information may then be shared with the user using a user-interface unit. For example, a small difference between the determined particulate matter concentrations in the air chamber and the ambient surroundings may indicate mask leakage and/or issues with the filter. It can therefore be it determined when to perform filter cleaning or replacement.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 shows a subject wearing a first type of mask to which the invention may be applied;
Fig. 2 shows the basic principle of an SMI sensor;
Fig. 3 shows a first example for an optical unit in the form of a black, absorbing material;
Fig. 4 shows a second example for an optical unit in the form of a specular reflector;
Fig. 5 shows a graph of false counts by obstruction (y-axis) as function of distance of the absorber to the focus spot (x-axis), for a black absorber and for a white reflector;
Fig. 6 shows an alternative mask design to which the invention may be applied;
Fig. 7 shows an alternative design for an interference based sensor instead of an SMI sensor, which can benefit from the optical unit.; and
Fig. 8 shows another alternative design for an interference based sensor instead of an SMI sensor, which can benefit from the optical unit.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a system which makes use of optical particle sensing and has a light source, a detector for detecting the presence of light reflected back to the detector, and a processor for determining a particulate matter count or concentration based on the received light reflected by particulate matter. An optical unit is along the light path which suppresses direct reflections back to the detector. The detector provides a detection signal dependent on interference between the emitted light and light reflected to the detector. In this way, an interference based the optical sensor can be reduced in size without compromising the sensing capability.

The invention will be described with reference to a preferred implementation in a pollution mask.

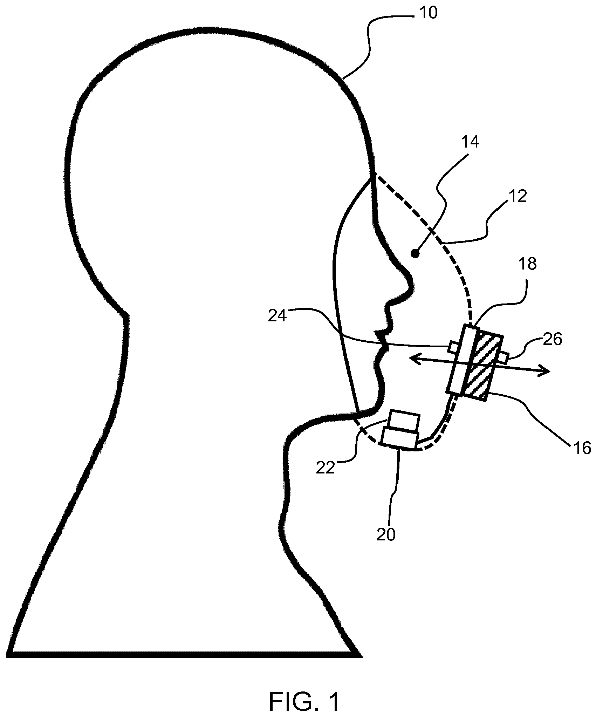

Fig. 1 shows a subject 10 wearing a face mask having a mask body 12 which covers the nose and mouth of the wearer. The purpose of the mask is to filter ambient air before it is breathed in by the wearer and to provide active control of the flow of air into an air chamber 14, i.e. the mask volume. A fan 16 draws in ambient air through a filter 18 which is in series with the fan. A controller 20 controls the fan and is associated with a memory 22. A first pollution sensor 24 is used to measure the particle count or concentration in the mask volume. An optional second pollution sensor 26 is used to measure the ambient particle count or concentration.

A part of the remainder of the mask area is formed of an air permeable filter so that the user may breathe in and out through the mask. Thus air is drawn into the air chamber 14 by lung inhalation through the mask wall and with assistance provided by the fan acting as an air pump.

Fig. 1 is only a schematic representation of one general example with a fan for drawing air into the air chamber. During exhalation, air is expelled from the air chamber 14. In this example, exhalation is through the same air pump arrangement and hence also through the filter 18, as well as through the air permeable part of the mask body, even though the expelled air does not need to be filtered.

As a further option, a one-way check valve (not shown in Fig. 1) in the mask wall may allow exhaled air to be expelled. Since the mask chamber 14 is closed by the face of the user, the pressure inside the closed chamber when the mask is worn will vary as a function of the breathing cycle of the subject. When the subject breathes out, there will be a slight pressure increase and when the subject breathes in there will be a slight pressure reduction. A check valve may thus avoid the need for the wearer to breathe out through the mask wall. The check valve thus opens during exhaling and closes during inhaling.

The fan can be on top of the check valve if the fan is instead used to blow the air out from the air chamber. In such a case, the filter 18 is not needed, and the mask body itself performs the filtering of air to be inhaled.

Thus, in examples where there is only one fan 16, the fan may be controlled to operate only to expel air, to assist exhalation, or it may be controlled to operate only to intake air, to assist inhalation. Alternatively, it may be operable bi-directionally, i.e. in opposite directions of flow, to assist sequentially in exhalation and inhalation of air through the filter 18. There may instead be separate fans for drawing air in to the air chamber and expelling air.

In cases with bidirectional flow control, the operation of the fan arrangement is also timed with the breathing cycle of the user. The breathing cycle is identified by the controller 20, which for example receives a differential pressure signal from a pressure sensor arrangement (not shown). The breathing cycle timing may then be used by the controller to time the periods of operation of the fan.

Furthermore, the breathing cycle timing may be obtained from a fan speed signal (instead of based on pressure sensing), since for a given fan drive level, fluctuations in fan speed will be observed which correlate with the breathing of the wearer. Thus, the fan speed signal may also be used as a proxy for the differential pressure, and the fan speed signal maybe used to control the fans as a function of the breathing cycle (by detecting the end of inhalation and then switching to exhalation control, and detecting the end of exhalation and then switching to inhalation control).

The controller 20, memory 22, fan 16 and sensors 24,26 are shown as separate units in separate locations, but of course some of them may be formed together as a shared module.

A power source such as a battery (not shown), preferably rechargeable, is arranged in the mask to power the controller 20, the sensor arrangement 24, 26 and the fan 16.

This invention relates specifically to the particle sensing. In particular it makes use of an optical particle sensor comprising a light source for emitting light along a light path in the air chamber 14, a detector for detecting the presence of received light reflected by particulate matter along the light path, and a processor for determining a particulate matter count or concentration based on the received light reflected by the particulate matter.

One particular example of optical sensor is an SMI sensor for example as disclosed in WO 2018/104153.

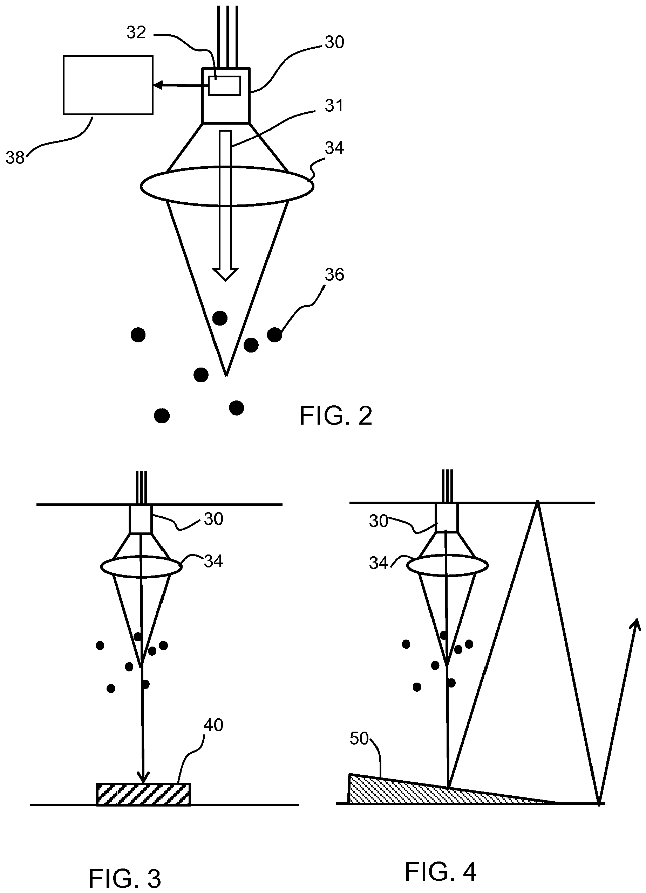

Fig. 2 shows the basic principle of the SMI sensor. It comprises a light source (laser) 30 which also receives reflected light into its laser cavity. The light source emits light generally along a light path 31 and the light is focused by a focusing lens 34. Particles 36 passing the beam in the vicinity of the focus position reflect light back into the laser. This is detected by a detector 32. The detector signals are provided to a processor 38 which processes the signals to derive a particle count and/or particle concentration.

The laser is for example a diode laser having a laser cavity. If a particle is present at focal point position, it scatters the beam. A part of the radiation of the beam is scattered in the direction of the illumination beam and this part is converged by the lens on the emitting surface of the laser diode and re-enters the cavity of this laser. The radiation reentering the cavity of the diode laser induces a variation in the gain of the laser and thus in the intensity of radiation emitted by the laser, and it is this phenomenon which is termed the self-mixing effect in a diode laser.

The change in intensity of the radiation emitted by the laser or of the optical wave in the laser cavity can be detected by a photo diode or a detector arranged to determine an impedance variation across the laser cavity. This is the function of the detector 32. The diode or impedance detector converts the radiation variation into an electric signal, and electronic circuitry is provided for processing this electric signal.

The self-mixing interference signal may, for example, be characterized by a short signal burst or a number of signal bursts. The Doppler frequency as observed in these signals is a measure for the particle velocity along the optical axis. Thus, the particle signals also give a Doppler frequency, which is used to determine the particle velocity. Using both the number of detected particles per time unit (the count rate) and the particle velocity, the particle concentration can be determined.

It may for example be preferred to use a DC drive current in order to simplify signal detection and signal analysis. The duration and the intensity of the detection signal may optionally also be used to determine the particle size.

The distance (and optionally velocity) may be determined within one measurement or based on a sequence of measurement steps. It is for example possible to use a DC drive current in a first period in time in order to generate a measure of the particle number and velocity, and a modulated drive current in order to determine false objects in the beam.

The SMI sensor may consist of more than one laser beam at different orientations (and more than one return path) in order to improve the concentration and speed measurement accuracy.

Further details of the possible SMI sensor designs will be known to those skilled in the art.

The advantage of the SMI sensor is its extremely compact size, occupying less than 5x5x5 mm³, and hence attractive for embedding into an air filtering facemask. For example, the diameter of the lens may be 1.7mm and the focal distance may be of the same order. However, any reflections received over a distance of around 30cm may be processed by the system so that any objects within that distance will distort the particle sensing measurements. This is especially of importance when the sensor to object distance is changing, resulting in Doppler frequencies.

Signal processing measures may be taken to detect these objects, which are to be filtered out but this introduces complexity and requires additional processing power and hence battery usage.

The invention enables the sensor to be provided in a smaller volume by using an optical unit along the light path 31, which suppresses direct reflections from the optical unit along the light path back to the light source. In this way, the optical path is reduced in length (terminated) or re-directed. This avoids the need for complex signal processing and enables more power efficient processing of the detection signals.

When used in a pollution mask, the air chamber through which the laser light is directed comprises a portion of the internal volume of the mask. The focal spot of the laser (i.e. the focus volume) is located at an inner volume of the face mask, i.e. within the air chamber, in the flow path of filtered air delivered by the fan (or by the breath of the wearer) through the filter.

Fig. 3 shows a first example for the optical unit, in the form of a black, absorbing material 40.

One option material is a coating composed of vertically aligned nanotube arrays (VANTA). This coating is known for its excellent absorbing properties over a wide range of wavelengths. The typical wavelength of the SMI sensor is for example 850 nanometers. An alternative absorbing material is known as "metal velvet", for instance by the trade name Acktar Black (Trade Mark). Any suitable light absorbing material may be used for absorbing the wavelength of the laser light.

Fig. 4 shows a second example for the optical unit in the form of a specular reflector 50 to fold the light path along a direction of the facemask (for example a contour along the face from ear to ear). There may be multiple reflectors to define the desired path. For example there may be a top reflector and a bottom reflector so that a zig-zag folded path is defined between them. A first surface 50 ensures that the beam is offset from the normal and thereby direct reflections of the laser beam from the reflector back to the laser are prevented. The offset created by the reflector is such that the full laser beam width (because the reflector is past the focal point, and hence is a diverging beam) is reflected out of the view of the lens so that the reflected light is not focused back into the laser cavity. The path (if unfolded) is then defined over a longer distance such as 30cm or more, and this path fits inside the face mask by the folded nature of the light path.

In both examples, the optical unit suppresses direct reflections from the optical unit along the light path back to the light source. For the example of Fig. 3, there are no reflections. For the example of Fig. 4, there are no direct reflections, so that light reflected back to the light source is reflected light from the medium in the air chamber. Light can be reflected by the optical unit 50 back to the light source but this is not direct light, so there is no light path from the light source, to the optical unit, and then back to the light source.

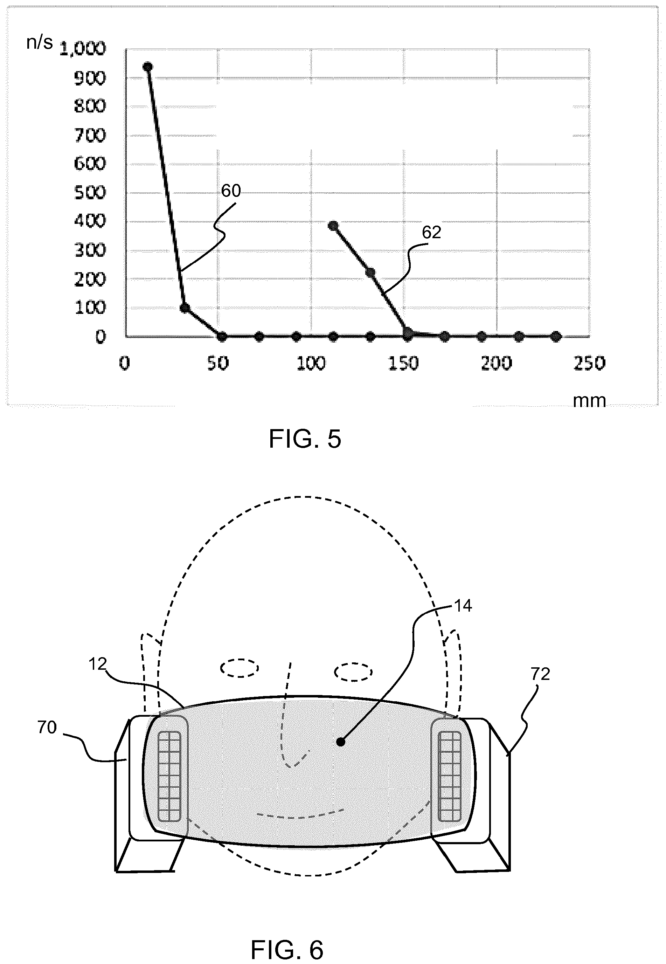

The effectiveness of the Acktar Black (Trade Mark) material has been tested, by placing the absorber at various distances along the SMI laser light path. Fig. 5 shows a graph of false counts by obstruction (in counts per second, y-axis) as function of distance of the absorber to the focus spot (in mm, x-axis), for the black absorber (plot 60) and for a white reflector (plot 62).

It has been found that if the absorber is positioned at least 5cm from the focus spot, the absorption is sufficient to reduce the number of false counts to less than 1 per second. In the case of white reflective paper, this low count rate is achieved only at distances above 150 mm, which is a too large distance to apply as a direct path in a face mask.

The example above is based on a pollution mask which creates a closed volume against the face of the wearer.

Fig. 6 shows an alternative mask design to which the invention may be applied. The air chamber defined by the mask is no longer sealed, but instead the fan generates an overpressure to ensure there is clean air in the breathing zone. The mask body 12 in this case forms a shield covering the nose and mouth, and the air chamber is defined between that shield and the face, but it is not sealed. A pressure of filtered air is maintained at greater than atmospheric pressure in the open volume.

The mask has two fan and filtering arrangements 70, 72 mounted below the ears of the wearer, and they deliver a flow across the face, maintaining a positive pressure in a zone near the nose and mouth. The flow is thus always away from this zone, avoiding non-filtered air reaching the nose or mouth of the wearer.

The sensor is again placed inside the air chamber in the path of the clean air to show the pollution level of the air available for breathing. The sensor is for example placed so that the detection spot is within the airflow from the fans at the side of the mask.

The examples above are based on a self-mixing interference sensor design, in which the reflected light to be analyzed is returned to the laser cavity in which interference takes place with the emitted laser light.

The interference is caused by the particle movement across the emitted beam. In particular, the reflected light from the particle at different positions along its trajectory, when mixed with the emitted light itself, results in a pattern of destructive and constructive interference. One such interference pattern indicates the presence of one particle, so that particle counting is possible. The interference pattern itself also allows the particle velocity to be determined. Thus, the detection is based on detection of an interference pattern caused by the interference between a reflection from a moving particle and a static reference beam. In particular, the optical path length to the detector via the particle is a function of the particle position and thereby varies over time. An interference-based sensor thus makes use of detection and analysis of the resulting interference pattern rather than an instantaneous intensity level.

In the case of an SMI sensor, the interference pattern (i.e. the evolution between intensity peaks and intensity troughs over time) may be detected by a photodiode either behind the laser or integrally formed within the laser cavity.

However, other forms of interference based detection may be used.

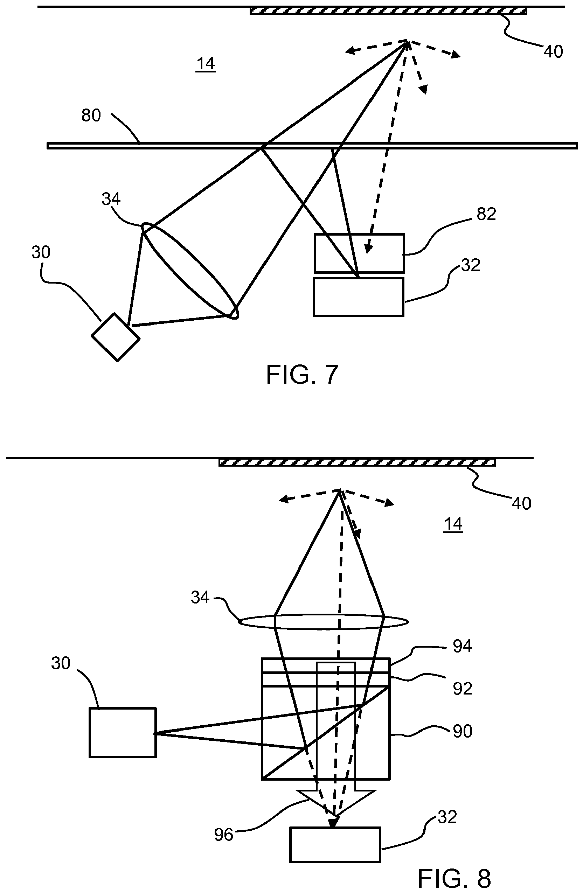

Fig. 7 shows one such alternative approach.

The light source 30 and focusing lens 34 again direct laser light along a light path towards an air chamber in which the sample to be analyzed is present. However, the light is delivered through a window 80 which is partially transmissive to the laser light and partially reflective. The transmitted light passes to the air chamber 14 and the reflected light passes to the detector 32. In this design, the detector is no longer co-located with, and integrated with, the light source. However, interference again takes place between the emitted light and the reflected light as the particle moves and hence the location moves from which reflection takes place, but in this case the interference is between a reflection of the emitted light and the light reflected from the particulate matter (shown by dotted arrows in Fig. 7). Thus, the detection signal, dependent on interference between the emitted light and light reflected by particulate matter towards the detector, may use directly emitted light or emitted light which has been reflected in a known way (independent of the particulate matter).

Fig. 7 also shows the optical unit in the form of a light-absorbing material 40. A band pass filter 82 is also shown at the input to the detector 32 for blocking ambient light.

Fig. 8 shows another possible design. The light from the laser 30 enters a polarization beam splitter 90 where it is reflected towards the air chamber 14. The light passes through a quarter wave plate 92 which implements a 90 degree polarization rotation, and through a filter 94 before being focused by the lens 34.

The light reflected from the particulate matter, after returning through the filter and quarter wave plate, is able to pass through the polarization beam splitter to the detector 32 due to the new polarization.

There is also light reflected by the filter-air transition represented by arrow 96. This functions as the reference beam, which interferes with the light reflected by the particulate matter, so that particle signals are detected. Thus, the detection is again based on signal interference.

The detector for example comprises a photodiode.

As shown in Fig. 1, there may be a sensor for the internal mask volume and a separate sensor for the ambient surroundings. By combining a sensor inside the mask volume with one outside the mask, the system can calculate and share with the user the efficacy of the filtration. Low values indicate in this case may indicate issues with the filter.

In the case of a self-mixing design, ambient light entering the laser cavity is negligible and will not give rise to Doppler frequencies.

This invention is applicable generally to a laser based optical particle sensor, such as an SMI sensor or other interference based sensor, for particle detection (i.e. measuring a particulate matter count or concentration) inside a compact volume.

This may be applied to a pollution mask as described above, but it may also be applied to other applications such as a robot vacuum cleaner, or an air purifier. Thus, the invention is not limited to pollution face masks. The need for a compact measurement of pollution level arises in various air purification systems in which feedback is desired either for energy efficiency or filtration efficiency improvements.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. If the term "adapted to" is used in the claims or description, it is noted the term "adapted to" is intended to be equivalent to the term "configured to". Any reference signs in the claims should not be construed as limiting the scope.

## Claims

1. A particle sensing system, comprising:
an air chamber (14);
an interference-based particle sensor comprising:
a light source (30) for emitting light along a light path to the air chamber;
a detector (32) for providing a detection signal dependent on interference between the emitted light and light reflected by particulate matter towards the detector; and
a processor (38) for determining a particulate matter count or concentration based on the received light reflected by the particulate matter; and
an optical unit (40;50) along the light path which suppresses direct reflections from the optical unit (40, 50) to the detector (32).

2. A system as claimed in claim 1, wherein the light source and the detector are co-located and integrated as single unit.

3. A system as claimed in any claim 2, wherein the sensor is a self-mixing interference sensor.

4. A system as claimed in any one of claims 1 to 3, wherein the optical unit comprises a light-absorbing material (40).

5. A system as claimed in any one of claims 1 to 3, wherein the optical unit comprises a reflector (50) which faces away from the detector (32).

6. A system as claimed in claim 5, wherein the optical unit comprises a plurality of reflectors for providing a light path length of at least 30cm before a reflection is directed back to the detector (32).

7. A system as claimed in any one of claims 1 to 6, comprising a focusing arrangement (34) for focusing the light emitted from the light source to a focal point located between the light source (30) and the optical unit (40;50).

8. A system as claimed in claim 7 wherein the optical unit (40;50) is located between 5cm and 10cm from the focal point along the light path (31).

9. A pollution mask comprising:
a mask body (12); and
a system as claimed in any one of claims 1 to 8,
wherein the air chamber (14) is defined between the mask body (12) and the face of a wearer of the pollution mask.

10. A mask as claimed in claim 9, wherein the air chamber (14) defines a closed volume against the face of a wearer of the pollution mask, and wherein the pollution mask further comprises a filter which forms a boundary between the air chamber and ambient surroundings outside the air chamber.

11. A mask as claimed in any claim 10, further comprising a fan (18) for drawing air from outside the air chamber into the air chamber through the filter and/or drawing air from the air chamber to the outside.

12. A mask as claimed in claim 9, wherein the air chamber (14) defines an open volume against the face of a wearer of the pollution mask, and wherein the pollution mask further comprises a fan and filter for maintaining a pressure of filtered air greater than atmospheric pressure in the open volume.

13. A mask as claimed in claim 12, comprising a controller (20) adapted to control a speed of the fan based on the determined particulate matter concentration.

14. A mask as claimed in any one of claims 9 to 12, further comprising a second sensor (26) located outside the air chamber (14) for determining the particulate matter count or concentration in the ambient surroundings.

15. A mask as claimed in claim 14, comprising a controller (20) which is adapted to determine a difference between the particulate matter count or concentration in the air chamber and the particulate matter count or concentration in the ambient surroundings.
